# EUROPÄISCHE PATENTSCHRIFT

(11) **EP 0 843 395 B1**
(45) Veröffentlichungstag und Bekanntmachung des Hinweises auf die Patenterteilung: **22.10.2003**
(21) Anmeldenummer: 97250335.3
(22) Anmeldetag: 11.11.1997
(51) Int. Cl.: H02B 13/035

(54) **Kapselungsgehäuse für gasisolierte, metallgekapselte Schaltanlagen**
Housing for gasinsulated, metalclad switchgear
Boîtier pour appareillage de commutation sous enveloppe métallique et à isolation gazeuse

(30) Priorität: 13.11.1996 DE 29620438 U
(43) Veröffentlichungstag der Anmeldung: 20.05.1998
(73) Patentinhaber: SIEMENS AKTIENGESELLSCHAFT, 80333 München (DE)
(72) Erfinder: Meinherz, Manfred, 13467 Berlin (DE)

(56) Entgegenhaltungen:
- EP-A- 0 681 352
- DE-A- 3 318 344
- DE-U- 7 208 413
- DE-U- 29 620 438
- FR-A- 2 577 723
- US-A- 3 856 978
- PATENT ABSTRACTS OF JAPAN vol. 15, no. 240 (E-1079), 20. Juni 1991 & JP 03 074121 A (MEIDENSHA CORP.), 28. März 1991
- PATENT ABSTRACTS OF JAPAN vol. 96, no. 7, 31. Juli 1996 & JP 08 084411 A (TOSHIBA CORP.), 26. März 1996

## Beschreibung

Die Erfindung betrifft ein Kapselungsgehäuse für gasisolierte, metallgekapselte Schaltanlagen, das eine Unterbrechereinheit aufnimmt, deren beweglicher Kontakt durch eine Antriebsstange axial verschiebbar ist, die mittels einer im Kapselungsgehäuse in einer nach außen vorspringenden Ausformung gelagerten Antriebswelle durch einen am äußeren Umfang des Kapselungsgehäuses angeordneten Schalterantrieb betätigbar ist.

Ein derartiges Kapselungsgehäuse für Hochspannungsanlagen geht hinsichtlich der Anordnung der Unterbrechereinheit, der axialen Verschiebung des zugehörigen, beweglichen Kontaktes durch die Antriebsstange und der Betätigung dieser Antriebsstange mittels einer im Kapselungsgehäuse gelagerten Antriebswelle durch einen am äußeren Umfang des Kapselungsgehäuses angeordneten Schalterantrieb beispielsweise aus der DE 44 46 944 A1 hervor. Obwohl gemäß der gasisolierten Schalteinrichtung nach der DE 41 23 710 A1 abweichend hiervon die mit der Antriebswelle in Verbindung stehende Antriebsstange über einen gasdichten Faltenbalg nach außen geführt ist, wobei dieser Faltenbalg von einer Ausbuchtung des Kapselungsgehäuses aufgenommen wird, erfolgt unabhängig von der jeweiligen Ausbildung zumindest die Anordnung des in einen separaten Gehäuse angeordneten Motorantriebes des zugehörigen Schalterantriebes über Konsolen am Umfang des Kapselungsgehäuses und stellt somit eine vom Kapselungsgehäuse getrennte Baugruppe dar. Das aber ist Herstellungs- und montagemäßig nicht nur mit einem zusätzlichen Aufwand verbunden, sondern auch mit dem Nachteil behaftet, daß zumindest das Kopplungsgestänge und andere Bauteile, wie beispielsweise der Meldeschalter, gegenüber Freilufteinflüssen nicht ausreichend geschützt sind. Dieses trifft auch für das ebenfalls mit einer Ausbuchtung versehene Kapselungsgehäuse gemäß der EP 0 024 494 B1 zu, bei dem die Ausbuchtung im Bereich der Schaltwelle angeordnet und durch einen Deckel verschließbar ist.

Weiterhin ist aus US 3,856,978 ein Kapselungsgehäuse für einen Leistungsschalter einer gasisolierten Schaltanlage bekannt. Das dortige Kapselungsgehäuse weist an seinem äußeren Umfang eine nach außen vorspringende Haube auf, in welcher eine Antriebswelle des Leistungsschalters gelagert ist. Die Haube ist stumpf auf das Kapselungsgehäuse aufgesetzt.

Aus dem Patent Abstract of Japan, Vol. 15, no. 240 (E-1079), 20. Juni 1991 ist ein Gasrohr bekannt, welches an seiner Umfangsfläche einen rechteckigen Anguss aufweist. Auf diesem rechteckigen Anguss ist ein Gehäuse ansetzbar.

Der Erfindung liegt die Aufgabe zugrunde, ein Kapselungsgehäuse entsprechend dem Oberbegriff des Anspruchs 1 zu schaffen, das gleichzeitig auch als Gehäuse für den Motorantrieb des Schalterantriebes, für das Kopplungsgestänge zwischen Motorantrieb und Schaltwelle und für andere Bauteile, wie beispielsweise den Meldeschalter, dient und hierfür auch einen sicheren Schutz beispielsweise gegenüber Einflüssen bei Aufstellung der Schaltanlage unter Freiluftbedingungen gewährleistet.

Erfindungsgemäß wird diese Aufgabe dadurch gelöst, dass das Kapselungsgehäuse an seinem Umfang eine ein Schalterantriebsgehäuse bildende Anformung in Form eines Angusses besitzt und die Ausformung in Form eines Angusses ausgebildet ist, und dass die nach außen vorspringende, zumindest die Antriebswelle aufnehmende Ausformung innerhalb des Schalterantriebsgehäuses angeordnet ist.

Durch die erfindungsgemäße Ausgestaltung eines Kapselungsgehäuses ist der Schutz gegenüber Freilufteinflüssen verbessert. Weiterhin kann das Kopplungsgestänge zwischen dem Motorantrieb und der Schaltwelle sowie beispielsweise der Meldeschalter ebenfalls innerhalb des Schalterantriebsgehäuses angeordnet sein. Bei dieser Ausgestaltung ist der Meldeschalter, dessen Betätigungswelle mittels eines Gestänges mit dem Kopplungsgestänge und damit mit der Antriebswelle in Verbindung steht, vorteilhaft an der nach außen vorspringenden als geschlossene Haube ausgebildeten Ausformung angeordnet.

Gemäß einer bevorzugten Ausführung kann die Anformung als umlaufende Wand den Schalterantrieb in seiner vollen Höhe umgeben, wobei beispielsweise diese Anformung mittels einer Dichtung durch einen Deckel verschlossen ist.

Alternativ kann aber auch die Anformung als umlaufender Steg ausgebildet sein, auf den über eine Dichtung eine den Schalterantrieb umschließende Haube aufgesetzt ist.

Unabhängig davon, welche Ausbildung für das den Schalterantrieb aufnehmende Gehäuse gewählt wird, ist durch die Erfindung ein Kapselungsgehäuse für gasisolierte, metallgekapselte Schaltanlagen geschaffen worden, bei dem das den Schalterantrieb aufnehmende Gehäuse nicht nur in das Kapselungsgehäuse integriert ist, sondern auch einen Schutz, insbesondere des Schalterantriebes, gegenüber Freilufteinflüssen gewährleistet. Außerdem ist eine Vormontage der Schaltereinheit mit dem Antrieb vor der Aufstellung möglich.

Indem die nach außen vorspringende, als geschlossene Haube ausgebildete Ausformung die Antriebswelle aufnimmt, wird gleichzeitig durch die Erfindung der umbaute Raum des Kapselungsgehäuses verringert. Die Antriebswelle ist durch die vorspringende Ausformung gasdicht durchgeführt, wobei die Längsachse der Antriebswelle tangential zur Außenkontur des Kapselungsgehäuses ohne Berücksichtigung der Ausformung verläuft.

Um bei diesem erfindungsgemäß ausgebildeten Kapselungsgehäuse darüber hinaus mit einfachen Mitteln auch eine sichere Abdichtung des Kapselungsgehäuses bei der Herstellung der Verbindung zwischen dem axial verschiebbaren Kontakt der Unterbrechereinheit und dem Kopplungsgestänge zu gewährleisten, ist schließlich die Antriebswelle innerhalb der nach außen vorspringenden, als geschlossene Haube ausgebildeten Ausformung mittels einer Gasdichtung druckdicht gelagert und steht mit ihrem aus dieser nach außen vorspringenden Ausformung herausragenden Ende über das Kopplungsgestänge mit dem Motorantrieb in Verbindung.

Weitere vorteilhafte Ausgestaltungen gehen aus den Unteransprüchen hervor.

Die Erfindung wird anhand von zwei Ausführungsbeispielen näher erläutert.

In den zugehörigen Zeichnungen zeigen
Figur 1 den Schnitt eines Kapselungsgehäuses für gasisolierte, metallgekapselte Schaltanlagen,
Figur 2 die Ansicht II des Kapselungsgehäuses nach Figur 1 im Bereich des auf diesem angeordneten Schalterantriebes und
Figur 3 eine Teilansicht einer gegenüber Figur 1 veränderten Ausführung des Kapselungsgehäuses.

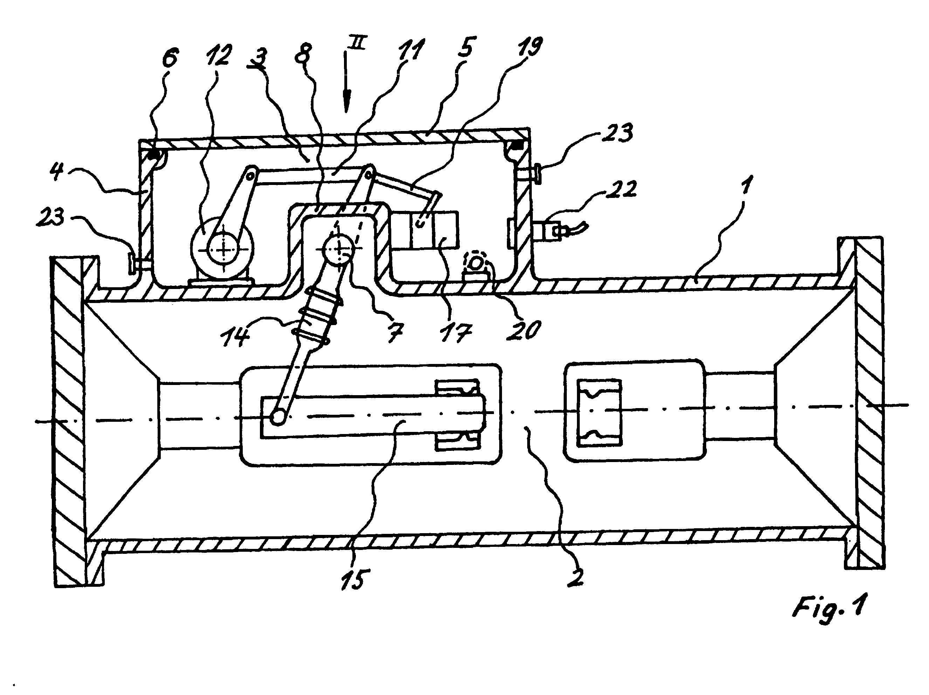

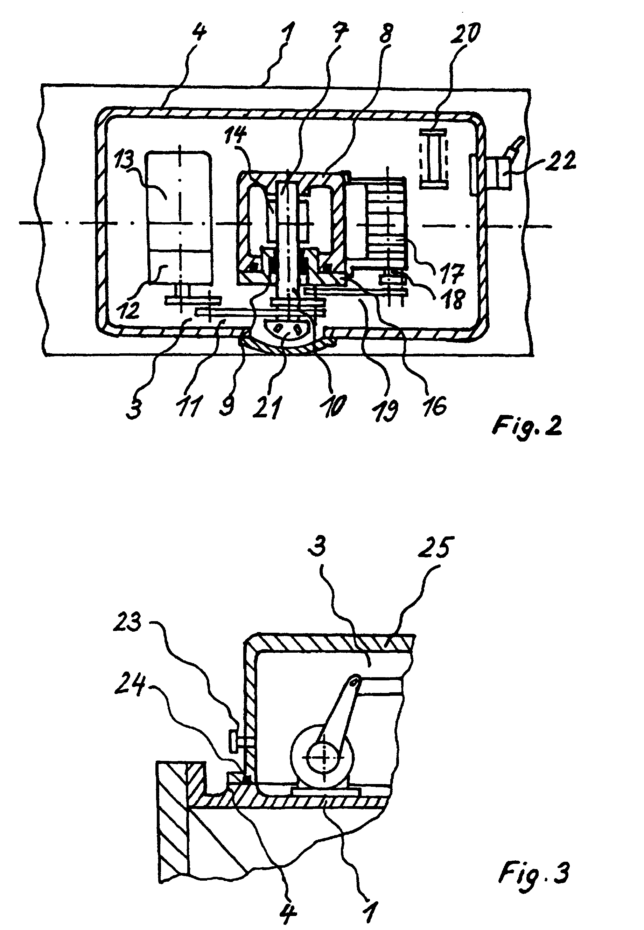

Figur 3 eine Teilansicht einer gegenüber Figur 1 veränderten Ausführung des Kapselungsgehäuses.

Wie Figur 1 in Verbindung mit Figur 2 zeigt, ist das Kapselungsgehäuse 1, das mit SF₆ gefüllt ist und in seinem Inneren eine Unterbrechereinheit 2 aufnimmt, an seinem Umfang mit einer das den Schalterantrieb 3 aufnehmende Gehäuse bildenden Anformung 4 in Form eines Angusses versehen, die den Schalterantrieb 3 als umlaufende Wand in seiner vollen Höhe umgibt. Damit der Schalterantrieb 3 gegenüber Umwelteinflüssen bei Aufstellung der Schaltanlage unter Freiluftbedingungen geschützt ist, ist die das Gehäuse bildende Anformung 4 durch den Deckel 5 mittels der Dichtung 6 verschlossen. Somit ist das den Schalterantrieb 3 aufnehmende Gehäuse in das Kapselungsgehäuse 1 integriert.

Gleichzeitig ist das Kapselungsgehäuse 1 aber auch mit einer nach außen vorspringenden, die Antriebswelle 7 aufnehmenden Ausformung 8, ebenfalls in Form eines Angusses, versehen. Diese Ausformung 8 ist als geschlossene Haube ausgebildet und ebenfalls innerhalb des den Schalterantrieb 3 aufnehmenden Gehäuses angeordnet. Dabei ist die Antriebswelle 7 innerhalb der nach außen vorspringenden, als geschlossene Haube ausgebildeten Ausformung 8 mittels einer Gasdichtung 9 druckdicht gelagert und steht mit ihrem aus der nach außen vorspringenden Ausformung 8 herausragenden Ende 10 über das Kopplungsgestänge 11 und das Getriebe 12 mit dem Motorantrieb 13 des Schalterantriebes 3 in Verbindung. Innerhalb des Kapselungsgehäuses 1, das sowohl einen kreisförmigen als einen rechtekkigen Querschnitt besitzen kann, ist die Antriebswelle 7 mittels der Antriebsstange 14 mit dem axial verschiebbaren Kontakt 15 der Unterbrechereinheit 2 verbunden.

Die Figuren 1 und 2 zeigen aber auch, daß die nach außen vorspringende, als Haube ausgebildete Ausformung 8, die hier stirnseitig durch einen die Gasdichtung 9 aufnehmenden Deckel verschlossen ist, den Meldeschalter 17 trägt, dessen Betätigungswelle 18 mittels eines Gestänges 19 mit dem Kopplungsgestänge 11 und damit mit der Antriebswelle 7 in Verbindung steht. Da gleichzeitig aber auch die Heizung 20 und die Anzeige 21 für die Schaltstellung der Unterbrechereinheit 2 innerhalb der Anformung 4 in Form eines Angusses angeordnet sind, bedeutet das, daß neben dem Schalterantrieb 3 auch der Meldeschalter 17, die Heizung 20 und die Anzeige 21 in der Anformung 4 geschützt sind. Schließlich wird die Anformung 4 auch mit dazu benutzt, um elektrische Steckverbindungen bzw. Kabel-Stopfbuchsen 22 für die elektrischen Belange innerhalb des Gehäuses aufzunehmen und es gleichzeitig mit Belüftungsöffnungen 23 zu versehen.

Gemäß Figur 3 ist bei dem Kapselungsgehäuse 1 die das den Schalterantrieb aufnehmende Gehäuse bildende Anformung 4 in Form eines Angusses als umlaufender Steg ausgebildet. Über eine Dichtung 24 ist auf diesen Steg eine den Schalterantrieb 3 umschließende Haube 25 aufgesetzt. Auch bei dieser gegenüber den Figuren 1 und 2 abgewandelten Ausführung wird, wie nicht weiter dargestellt, die nach außen vorspringende, die Antriebswelle 7 aufnehmende Ausformung 8, die in Form eines Angusses als geschlossene Haube ausgebildet ist, durch die Haube 23 in Verbindung mit dem umlaufenden Steg aufgenommen.

## Patentansprüche

1. Kapselungsgehäuse (1) für gasisolierte, metallgekapselte Schaltanlagen, das eine Unterbrechereinheit (2) aufnimmt, deren beweglicher Kontakt (15) durch eine Antriebsstange (14) axial verschiebbar ist, die mittels einer im Kapselungsgehäuse (1) in einer nach außen vorspringenden Ausformung (8) gelagerten Antriebswelle (7) durch einen am äußeren Umfang des Kapselungsgehäuses (1) angeordneten Schalterantrieb (3) betätigbar ist,
**dadurch gekennzeichnet , daß**
das Kapselungsgehäuse (1) an seinem Umfang eine ein Schalterantriebsgehäuse (4) bildende Anformung (4) in Form eines Angusses besitzt und die Ausformung (8) in Form eines Angusses ausgebildet ist,
und **dass** die nach außen vorspringende, zumindest die Antriebswelle (7) aufnehmende Ausformung (8) innerhalb des Schalterantriebsgehäuses (4) angeordnet ist.

2. Kapselungsgehäuse nach Anspruch 1,
**dadurch gekennzeichnet, daß**
die Anformung (4) als umlaufende Wand den Schalterantrieb (3) in seiner vollen Höhe umgibt.

3. Kapselungsgehäuse nach Anspruch 1 und 2,
**dadurch gekennzeichnet, daß**
die Anformung (4) mittels einer Dichtung (6) durch einen Deckel (5) verschlossen ist.

4. Kapselungsgehäuse nach Anspruch 1,
**dadurch gekennzeichnet, daß**
die Anformung (4) als umlaufender Steg ausgebildet ist, auf den über eine Dichtung (23) eine den Schalterantrieb (3) umschließende Haube (24) aufgesetzt ist.

5. Kapselungsgehäuse nach Anspruch 1 bis 4,
**dadurch gekennzeichnet, daß**
die Antriebswelle (7) innerhalb der nach außen vorspringenden, als geschlossene Haube ausgebildeten Ausformung (8) mittels einer Gasdichtung (9) druckdicht gelagert ist und mit ihrem aus der nach außen vorspringenden Ausformung (8) herausragenden Ende (10) über das Kopplungsgestänge (11) mit dem Motorantrieb (13) in Verbindung steht.

6. Kapselungsgehäuse nach Anspruch 1 bis 5,
**dadurch gekennzeichnet, daß**
an der nach außen vorspringenden, als geschlossene Haube ausgebildeten Ausformung (8) der Meldeschalter (16) angeordnet ist, dessen Betätigungswelle (17) mittels eines Gestänges (18) mit dem Kopplungsgestänge (11) und damit mit der Antriebswelle (7) in Verbindung steht.

## Claims

1. Encapsulating enclosure (1) for gas-insulating, metal-encapsulated switchgear assemblies, which holds an interrupter unit (2) whose moving contact (15) can be moved axially by means of a drive rod (14) which can be operated by a switch drive (3), which is arranged on the outer circumference of the encapsulating enclosure (1), by means of a drive shaft (7) which is mounted in a formed-out area (8) which projects outwards in the encapsulating enclosure (1),
**characterized in that**
the encapsulating enclosure (1) has on its circumference an integrally formed area (4), which forms a switch drive enclosure (4), in the form of an integral casting, and the formed-out area (8) is in the form of an integral casting,
and **in that** the formed-out area (8) which projects outwards and holds at least the drive shaft (7) is arranged within the switch drive enclosure (4).

2. Encapsulating enclosure according to Claim 1,
**characterized in that**
the integrally formed area (4) surrounds the switch drive (3) over its full height, as a circumferential wall.

3. Encapsulating enclosure according to Claims 1 and 2, **characterized in that**
the integrally formed area (4) is closed by a cover (5), by means of a seal (6).

4. Encapsulating enclosure according to Claim 1,
**characterized in that**
the integrally formed area (4) is in the form of a circumferential web, on which a shroud (24), which surrounds the switch drive (3) is placed, via a seal (23).

5. Encapsulating enclosure according to Claims 1 to 4,
**characterized in that**
the drive shaft (7) is mounted in a pressure-type manner by means of a gas seal (9) within the formed-out area (9) which projects outwards and is in the form of a closed shroud, and is connected by its end (10), which projects out of the formed-out area (8) which projects outwards, via the coupling linkage (11) to the motor drive (13).

6. Encapsulating enclosure according to Claims 1 to 5,
**characterized in that**
the signalling switch (16) is arranged on the formed-out area (8) which projects outwards and is in the form of a closed shroud, and the operating shaft (17) of the signalling switch (16) is connected by means of a linkage (18) to the coupling linkage (11), and hence to the drive shaft (7).

## Revendications

1. Boîtier (1) de blindage pour appareil de commutation sous enveloppe métallique et à isolation gazeuse, qui reçoit une unité (2) de coupure, dont le contact (15) mobile peut coulisser axialement sous l'action d'une tringle (14) d'entraînement, qui peut être actionnée au moyen d'un arbre (7) d'entraînement monté dans le boîtier (1) de blindage dans un renfoncement (8) en saillie vers l'extérieur par un entraînement (3) de commutateur placé sur le pourtour extérieur du boîtier (1) de blindage,
**caractérisé en ce que**
le boîtier (1) de blindage a sur son pourtour, sous la forme d'un culot, une conformation (4) formant un boîtier (4) pour l'entraînement du commutateur et le renfoncement (8) est constitué sous la forme d'un culot
et **en ce que** le renfoncement (8) en saillie vers l'extérieur et recevant au moins l'arbre (7) d'entraînement est placé à l'intérieur du boîtier (4) pour l'entraînement du commutateur.

2. Boîtier de blindage suivant la revendication 1,
**caractérisé**
**en ce que** la conformation (4) entoure, sous la forme d'une paroi faisant le tour, l'entraînement (3) du commutateur sur toute sa hauteur.

3. Boîtier de blindage suivant la revendication 1 et 2,
**caractérisé**
**en ce que** la conformation (4) est fermée au moyen d'une étanchéité (6) par un couvercle (5).

4. Boîtier de blindage suivant la revendication 1,
**caractérisé**
**en ce que** la conformation (4) est constituée sous la forme d'une aile qui fait le tour et sur laquelle est posée, par l'intermédiaire d'une étanchéité (23), une hotte (24) entourant l'entraînement (3) du commutateur.

5. Boîtier de blindage suivant la revendication 1 à 4,
**caractérisé**
**en ce que** l'arbre (7) d'entraînement est monté d'une manière étanche à la pression au moyen d'une étanchéité (9) aux gaz dans la conformation (8) faisant saillie vers l'extérieur et conformée en hotte fermée et est en liaison avec l'entraînement (13) à moteur par son extrémité (10) dépassant de la conformation (8) en saillie vers l'extérieu par l'intermédiaire de la tringlerie (11) d'accouplement.

6. Boîtier de blindage suivant la revendication 1 à 5,
**caractérisé**
**en ce que** sur la conformation (8) faisant saillie vers l'extérieur et conformée en hotte fermée est placé l'interrupteur (16) de signalisation, dont l'arbre (17) d'actionnement est relié au moyen d'une tringlerie (18) à la tringlerie (11) de couplage et ainsi à l'arbre (7) d'entraînement.
